# EUROPEAN PATENT APPLICATION

(11) **EP 4 841 585 A1**
(43) Date of publication of application: **18.11.2026**
(21) Application number: 26178574.5
(22) Date of filing: 13.05.2026
(51) Int. Cl.: G06V 20/13, G06V 10/82, G06V 20/10

(54) **METHOD AND SYSTEM FOR GENERATING SYNTHETIC HYPERSPECTRAL IMAGES (SHSIS) FROM SPATIAL MULTI-RESOLUTION SATELLITE AERIAL IMAGES**

(30) Priority: 14.05.2025 IN 202521046368
(71) Applicant: Tata Consultancy Services Limited, Maharashtra (IN)
(72) Inventor: CHAUDHURI, Ushasi, 411057 Pune, Maharashtra (IN); DESHPANDE, Shailesh Shankar, 411028 Pune, Maharashtra (IN); PAL, Arpan, 700091 Kolkata, West Bengal (IN)
(74) Representative: Goddar, Heinz J.

(57) **Abstract**

Conventional techniques using generative techniques and self-supervised learning for learning hyperspectral images (HSIs) rely on large datasets for learning pretext tasks. This disclosure relates generally to a method and system for generating synthetic hyperspectral images (SHSIs) from spatial multi-resolution satellite aerial images. The method receives a plurality of spatial multi-resolution satellite aerial images, and an associated map image of an area of interest and generates a plurality of synthetic map images that represent a spatial information of the area of interest, using a Pixel-to-pixel Multi-Resolution Image-to-image Translation Network (PMRIT-NET). A global level stochasticity, a regional level stochasticity, and a pixel level stochasticity is incorporated for each of the plurality of synthetic map images to obtain the spectral information of the plurality of synthetic map images. A plurality of SHSIs is generated using the spatial information and the spectral information.

## Description

### CROSS-REFERENCE TO RELATED APPLICATIONS AND PRIORITY

The present application claims priority to Indian application no. 202521046368, filed on May 14, 2025.

### TECHNICAL FIELD

The disclosure herein generally relates to image processing, and, more particularly, to a method and system for generating synthetic hyperspectral images (SHSIs) from spatial multi-resolution satellite aerial images.

### BACKGROUND

Acquiring and annotating large datasets of hyperspectral images (HSIs) for image segmentation tasks is a labor intensive and resource intensive task. Due to low spatial resolution of the HSIs, annotation via visual inspection becomes immensely challenging, requiring domain experts to do the job. This limits the availability of training data. Furthermore, the low spatial resolution of the HSIs leads to large patches of land being represented by a single pixel. This leads to the spectra of various surrounding land-cover classes getting mixed up. The existing techniques heavily rely on using pre-trained models to compensate for this. However, their effectiveness is again confounded by the availability of large, annotated datasets for self-supervised learning.

To solve this, the conventional techniques have proposed using generative models to create synthetic images. However, these are explored more frequently in Red, Green, and Blue (RGB) images, Light Detection and Ranging (LiDAR) point cloud generation, synthetic aperture radar image generation, and certain bands of multispectral image generation. However, this has rarely been explored for the HSIs owing to their low spatial resolution and high spectral resolution. One of the significant challenges while dealing with the HSIs is that they have a very low spatial resolution. Generating synthetic HSIs directly from the other HIS images is challenging.

### SUMMARY

Embodiments of the present disclosure present technological improvements as solutions to one or more of the above-mentioned technical problems recognized by the inventors in conventional systems. For example, in one embodiment, a method for generating synthetic hyperspectral images (SHSIs) from spatial multi-resolution satellite aerial images is provided. The method includes receiving a plurality of spatial multi-resolution satellite aerial images captured via a satellite, and an associated map image of an area of interest. Further the method includes generating, by using a Pixel-to-pixel Multi-Resolution Image-to-image Translation Network (PMRIT-NET), a plurality of synthetic map images using the plurality of spatial multi-resolution satellite aerial images and the associated map image. The plurality of synthetic map images represents a spatial information of the area of interest. Further the method includes clustering a plurality of pixels in the plurality of synthetic map images of the PMRIT-NET into a plurality of land-use classes, via a K-means clustering, to obtain a plurality of cluster centres, wherein each of the plurality of pixels attains a label of an associated nearest cluster centre of the plurality of cluster centres corresponding to each of the plurality of land-use classes. Further the method includes incorporating a global level stochasticity, a regional level stochasticity, and a pixel level stochasticity for each of the plurality of synthetic map images that were clustered into the plurality of land-use classes, based on a geometric nature of the plurality of land-use categories, to obtain a spectral information of the plurality of synthetic map images. Further the method includes generating a plurality of synthetic hyperspectral images (SHSIs) for the received plurality of spatial multi-resolution satellite aerial images, using the obtained spatial information of the plurality of spatial multi-resolution satellite aerial images from the PMRIT-NET, and the obtained spectral information of the plurality of synthetic map images.

In another aspect, a system for generating synthetic hyperspectral images (SHSIs) from spatial multi-resolution satellite aerial images is provided. The system comprises a memory storing instructions; one or more communication interfaces; and one or more hardware processors coupled to the memory via the one or more communication interfaces, wherein the one or more hardware processors are configured by the instructions to: receive a plurality of spatial multi-resolution satellite aerial images captured via a satellite, and an associated map image of an area of interest; generate by using a Pixel-to-pixel Multi-Resolution Image-to-image Translation Network (PMRIT-NET), a plurality of synthetic map images using the plurality of spatial multi-resolution satellite aerial images and the associated map image, wherein the plurality of synthetic map images represents a spatial information of the area of interest; cluster a plurality of pixels in the plurality of synthetic map images of the PMRIT-NET into a plurality of land-use classes, via a K-means clustering, to obtain a plurality of cluster centres, wherein each of the plurality of pixels attains a label of an associated nearest cluster centre of the plurality of cluster centres corresponding to each of the plurality of land-use classes; incorporate a global level stochasticity, a regional level stochasticity, and a pixel level stochasticity for each of the plurality of synthetic map images that were clustered into the plurality of land-use classes, based on a geometric nature of the plurality of land-use categories, to obtain a spectral information of the plurality of synthetic map images; and generate a plurality of synthetic hyperspectral images (SHSIs) for the received plurality of spatial multi-resolution satellite aerial images, using the obtained spatial information of the plurality of spatial multi-resolution satellite aerial images from the PMRIT-NET, and the obtained spectral information of the plurality of synthetic map images.

In yet another aspect, there are provided one or more non-transitory machine-readable information storage mediums comprising one or more instructions which when executed by one or more hardware processors cause a method for generating synthetic hyperspectral images (SHSIs) from spatial multi-resolution satellite aerial images. The method includes receiving a plurality of spatial multi-resolution satellite aerial images captured via a satellite, and an associated map image of an area of interest. Further the method includes generating, by using a Pixel-to-pixel Multi-Resolution Image-to-image Translation Network (PMRIT-NET), a plurality of synthetic map images using the plurality of spatial multi-resolution satellite aerial images and the associated map image, wherein the plurality of synthetic map images represents a spatial information of the area of interest. Further the method includes clustering a plurality of pixels in the plurality of synthetic map images of the PMRIT-NET into a plurality of land-use classes, via a K-means clustering, to obtain a plurality of cluster centres, wherein each of the plurality of pixels attains a label of an associated nearest cluster centre of the plurality of cluster centres corresponding to each of the plurality of land-use classes. Further the method includes incorporating a global level stochasticity, a regional level stochasticity, and a pixel level stochasticity for each of the plurality of synthetic map images that were clustered into the plurality of land-use classes, based on a geometric nature of the plurality of land-use categories, to obtain a spectral information of the plurality of synthetic map images. Further, the method includes generating a plurality of synthetic hyperspectral images (SHSIs) for the received plurality of spatial multi-resolution satellite aerial images, using the obtained spatial information of the plurality of spatial multi-resolution satellite aerial images from the PMRIT-NET, and the obtained spectral information of the plurality of synthetic map images.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for for generating synthetic hyperspectral images (SHSIs) from spatial multi-resolution satellite aerial images, according to some embodiments of the present disclosure.
FIG. 2 is a functional architecture of the system for generating the SHSIs from the spatial multi-resolution satellite aerial images, according to some embodiments of the present disclosure.
FIGS. 3A, and 3B depict a flow diagram of the method for generating the SHSIs from the spatial multi-resolution satellite aerial images, according to some embodiments of the present disclosure.
FIG. 4 depicts generating a plurality of synthetic map images using a plurality of spatial multi-resolution satellite aerial images and an associated map image, by using a Pixel-to-pixel Multi-Resolution Image-to-image Translation Network (PMRIT-NET).
FIGS. 5A, and 5B depict an exemplary spatial satellite aerial image, and an associated map image of an area of interest respectively, according to some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Learning from hyperspectral images (HSIs) requires large, annotated training datasets, which is a laborious task. The low spatial resolution of the HSIs exponentially increases the challenge further and requires skilled domain experts. Existing techniques using generative techniques and self-supervised learning also rely on large datasets for learning pretext tasks.

Embodiments herein provide a method and system for generating synthetic hyperspectral images (SHSIs) from spatial multi-resolution satellite aerial images. The method also referred to as a Hyper-SynGen framework (Hyperspectral-Synthetic image generator), according to some embodiments of the present disclosure. The disclosed method extracts spatial information separately and is filled with spectral information, consequently, to generate a higher-resolution SHSIs. Furthermore, to get high-resolution spatial information, an image-to-image translation is used to yield better results than direct clustering or segmentation, as these can lead to loss of continuity information (e.g., disjoint roads, disconnected rivers, etc.). The disclosed method provides the Hyper-SynGen framework to synthetically generate a plurality of SHSIs without manual labeling. The spatial geometry of a plurality of land-use classes is extracted using the image-to-image translation technique referred to as a Pixel-to-pixel Multi-Resolution Image-to-image Translation Network (PMRIT-NET) from a map image and the spectral information is added using a spectral library. To replicate complexity of real-world landscapes, a stochasticity is incorporated in a land-use class distribution at i) a pixel level, ii) a region level, and iii) a global level, depending on the land-use class at hand. This process relies on crowd-sourced labeling provided by the map image and does not require further manual labeling. Using the plurality of SHSIs to learn a pretext task on a self-supervised learning setup helps achieve better performance than the existing state-of-the-art (SOTA). Hence, when replaced with real annotated data, synthetically generated dataset comprising the plurality of SHSIs is experimentally found to be as capable as real data, as it boosts the overall SOTA by a considerable margin.

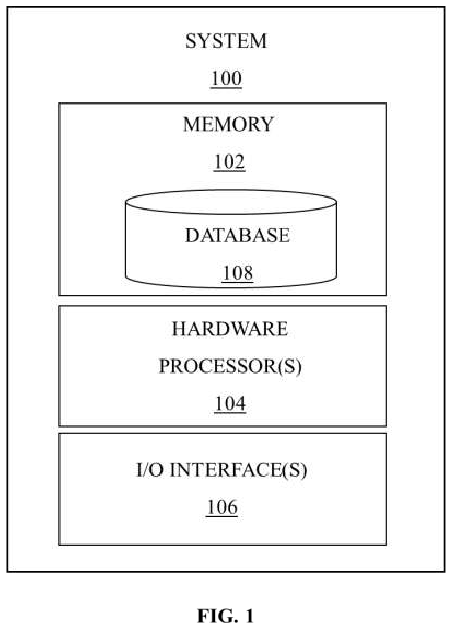

Referring now to the drawings, and more particularly to FIG. 1 through FIG. 5B, where similar reference characters denote corresponding features consistently throughout the figures, there are shown preferred embodiments, and these embodiments are described in the context of the following exemplary system and/or method.

FIG. 1 is a functional block diagram of a system 100 for generating the SHSIs from the spatial multi-resolution satellite aerial images, according to some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors.

Referring to the components of the system 100, in an embodiment, the processor (s) 104 can be the one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Thus, the memory 102 may comprise information pertaining to input(s)/output(s) of each step performed by the processor(s) 104 of the system 100 and methods of the present disclosure. In an embodiment, a database 108 is comprised in the memory 102, wherein the database 108 comprises information on a plurality of spatial multi-resolution satellite aerial images, and an associated map image, a plurality of synthetic map images, a plurality of pixels, the plurality of land-use classes, a plurality of cluster centres, a global level stochasticity, a regional level stochasticity, a pixel level stochasticity, the spectral information, the spatial information, the plurality of SHSIs, and the like. The memory 102 further comprises a plurality of modules (not shown for various technique(s) such as, the PMRIT-NET, a Connected Component Analysis (CCA), a K-means clustering, and thereof. The above-mentioned technique(s) are implemented as at least one of a logically self-contained part of a software program, a self-contained hardware component, and/or, a self-contained hardware component with a logically self-contained part of a software program embedded into each of the hardware component (e.g., hardware processor 104 or memory 102) that when executed perform the method described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

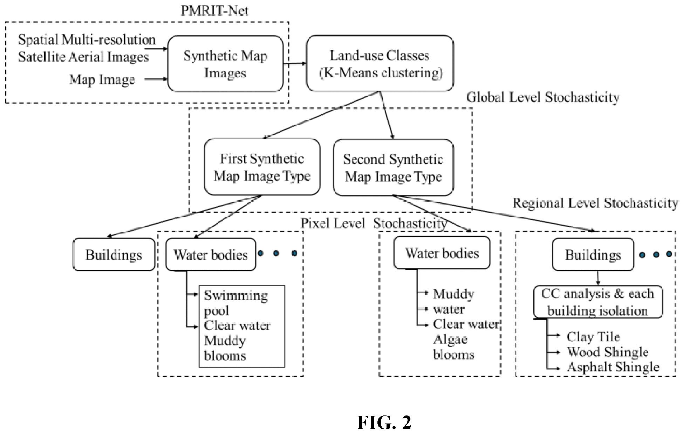

FIG. 2, with reference to FIG. 1, is a functional architecture of the system 100 for generating the SHSIs from the spatial multi-resolution satellite aerial images, according to some embodiments of the present disclosure. The system 100 receives the plurality of spatial multi-resolution satellite aerial images, and associated map image of an area of interest. The system 100 generates the plurality of synthetic map images using the plurality of spatial multi-resolution satellite aerial images and the associated map image, by using the PMRIT-NET. The plurality of synthetic map images represents the spatial information of the area of interest. Further the system 100 clusters the plurality of pixels in the plurality of synthetic map images of the PMRIT-NET into the plurality of land-use classes, via the K-means clustering, to obtain the plurality of cluster centres, at a Land-use Classes component as depicted in FIG. 2. The system 100 incorporates the global level stochasticity, the regional level stochasticity, and the pixel level stochasticity for each of the plurality of synthetic map images that were clustered into the plurality of land-use classes, based on a geometric nature of the plurality of land-use categories, to obtain the spectral information of the plurality of synthetic map images. The global level stochasticity is incorporated by classifying each synthetic map image as one of (i) a first synthetic map image type, and (ii) a second synthetic map image type based on the plurality of buildings in the synthetic map image. The system 100 generates the plurality of SHSIs for the received plurality of spatial multi-resolution satellite aerial images, using the obtained spatial information of the plurality of spatial multi-resolution satellite aerial images from the PMRIT-NET, and the obtained spectral information of the plurality of synthetic map images.

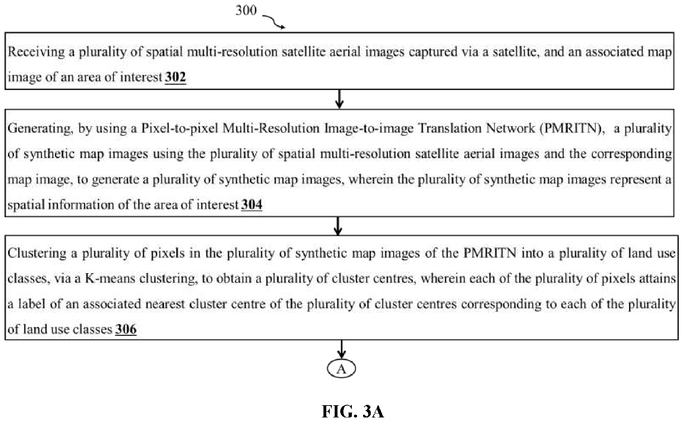

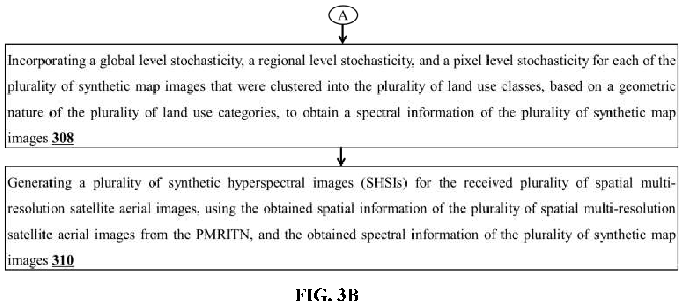

FIGS. 3A, and 3B depict a flow diagram of a method 300 for generating the SHSIs from the spatial multi-resolution satellite aerial images, according to some embodiments of the present disclosure.

In an embodiment, the system 100 comprises one or more data storage devices or the memory 102 operatively coupled to the processor(s) 104 and is configured to store instructions for execution of steps of the method 300 by the processor(s) 104. The steps of the method 300 of the present disclosure will now be explained with reference to the components or blocks of the system 100 as depicted in FIG. 1, the functional architecture diagram depicted in FIG. 2, and the steps of flow diagram as depicted in FIGS. 3A, and 3B. Although process steps, method steps, techniques or the like may be described in a sequential order, such processes, methods and techniques may be configured to work in alternate orders. In other words, any sequence or order of steps that may be described does not necessarily indicate a requirement that the steps to be performed in that order. The steps of processes described herein may be performed in any order practically. Further, some steps may be performed simultaneously.

Referring to steps of FIG. 3A, at step 302 of the method 300, the one or more hardware processors 104 are configured to receive the plurality of spatial multi-resolution satellite aerial images captured via a satellite, and the associated map image of the area of interest. In remote sensing, ground sample distance (GSD) is a distance between pixel centers measured on the ground. The higher the value of the image GSD, the lower the spatial resolution of the image. In the method of the present disclosure, the plurality of spatial multi-resolution satellite aerial images at various GSD or resolutions are used to construct a resolution-agnostic framework for generating the plurality of SHSIs. The associated map image includes but is not limited to Google Maps and may encompass other mapping services or sources that are appropriate, according to some embodiments of the present disclosure. An infinite pool of data is available from map images, at any given location that map images have access to, a spatial satellite aerial image of the plurality of spatial multi-resolution satellite aerial images and its associated map image can be obtained. A plurality of colors in the map image is used to define each of the plurality of land-use classes that are consistent globally. The map image is used to obtain the spatial information in the process of generating the plurality of SHSIs.

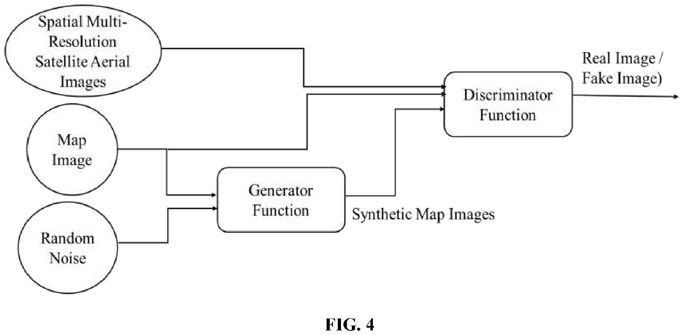

At step 304 of the method 300, the one or more hardware processors 104 are configured to generate the plurality of synthetic map images using the plurality of spatial multi-resolution satellite aerial images and the associated map image, by using the PMRIT-NET. FIG. 4 depicts generating the plurality of synthetic map images using the plurality of spatial multi-resolution satellite aerial images and the associated map image by using the PMRIT-NET. The PMRIT-NET is trained by iteratively performing:
(a) Predicting a synthetic map image corresponding to a spatial multi-resolution satellite aerial image of the plurality of spatial multi-resolution satellite aerial images by a generator function G of the PMRIT-NET, using the map image and a random noise as depicted in FIG. 4.
(b) Classifying the synthetic map image as at least one image type (e.g., a real image or a fake image) by a discriminator function *D* of the PMRIT-NET, using the spatial multi-resolution satellite aerial image of the plurality of spatial multi-resolution satellite aerial images, and one of the (i) the map image, and (ii) the predicted synthetic map image, as depicted in FIG. 4. If the synthetic map image is classified as the fake image, then the generator function G is updated based on the map image for enhancing a quality of the synthetic map image, and the steps (a), and (b) are repeated, and the training of the PMRIT-NET stops (or is terminated) when the discriminator function fails to classify the synthetic map image as the fake image.

The PMRIT-NET upon receiving a new satellite aerial image predicts the corresponding synthetic map image.

The generator function G gradually predicts the synthetic map image based on the spatial multi-resolution satellite aerial image of the plurality of spatial multi-resolution satellite aerial images so realistically that the discriminator function cannot distinguish the synthetic map image from the associated map image. This realistically predicted synthetic map image is referred to as the real image. If the discriminator function identifies that the predicted synthetic map image as not realistic enough, then the predicted synthetic map image is referred as the fake image.

The plurality of synthetic map images represents the spatial information of the area of interest. To obtain the spatial information of the area of interest the PMRIT-NET is used that is an adversarial network setup, particularly a conditional generative adversarial network (GAN). A conventional generative adversarial network learns a mapping function *F* to learn an output image *y* from the random noise z, *F: z* → *y.* However, the PMRIT-NET, which is the conditional GAN (*L_{cGAN}*), learns the mapping function F to learn the output image y from the input image c and the random noise *z, G* : {*c, z*} → y. The discriminator function *D* is trained to detect the fake image, and the generator function *G* is trained to produce a plurality of real images as possible, which the discriminator function *D* cannot classify as the fake image. The input image *c* here represents the spatial satellite aerial image of the spatial multi-resolution satellite aerial images. The output image y here represents the synthetic map image of the plurality of synthetic map images. The random noise z is provided in the form of dropouts to the generator function *G* on several network layers. The generator function *G* uses an encoder-decoder-based "U-Net" framework with skip connections between lateral layers, that is each layer *i* and layer *(n* - *i),* where *n* is the total number of layers. Each skip connection simply concatenates all channels at layer i with those at layer *(n - i).* For the discriminator function *D* a Patch-GAN architecture is used. An objection function of the PMRIT-NET as *L_{cGAN}* is described as: $\begin{matrix}{min}_{{θ}_{g}} {max}_{{θ}_{d}} {L}_{cGAN} \left({θ}_{g}, {θ}_{d}\right) = {min}_{{θ}_{g}} {max}_{{θ}_{d}} \left[{E}_{c , x ∼ {P}_{data} \left(c, x\right)} log {D}_{{θ}_{g}}\left(c, x\right)+\right. \\ \left[{E}_{c ∼ {P}_{data} \left(c\right) , z ∼ {P}_{z} \left(z\right)} log\left(1-{D}_{{θ}_{d}}\left(c,{G}_{{θ}_{g}}\left(z\right)\right)\right)\right]\end{matrix}$ (1)
wherein *G_{θ_{g}}* is the generator function;
*θ_{g}* represents learnable parameters of the generator function;
z represents the random noise;
*D_{θ_{d}}* is the discriminator function;
*θ_{d}* represents learnable parameters of the generator function;
*z* is the random noise;
*c* is the spatial satellite aerial image of the plurality of spatial multi-resolution satellite aerial images;
*x* is the map image; and
*E* refers to an expectation operator.

The task is now learning joint distribution *P_{data}* (*c, x*) of the plurality of spatial multi-resolution satellite aerial images and the associated map image, and then be able to sample from the conditional distribution *P_{data}* (*x*|*c*).

Existing research has shown that GANs can benefit significantly by adding an L1 loss to stabilize the GAN. The discriminator function *Δ* remains the same while the generator function G is added to bring the predicted value and the actual value closer and fool the discriminator function. The L1 loss is the sum of all the absolute differences between the actual value and the predicted values. It adds sparsity and, hence, less blurring to the plurality of synthetic map images. Hence, pairing the L1 loss with the generator function *G* yields : ${L}_{L 1} \left({θ}_{g}\right) = {E}_{c , x ∼ {P}_{data} \left(c, x\right)} {\left‖x-{G}_{{θ}_{g}}\left(c, z\right)\right‖}_{1}$ (2)

Here, the generator function *G* tries to minimize the equation (2) in conjugation with the discriminator function *D* that attempts to maximize it. Therefore, the final objective function is: $min max \left[{L}_{cGAN} \left({θ}_{g}, {θ}_{d}\right)+λ {L}_{L 1}\left({θ}_{g}\right)\right]$ (3) *θ_{g} θ_{d}*
where, *λ* is a Lagrangian multiplier that is chosen heuristically depending on the intrinsic properties of training data comprising the plurality of spatial multi-resolution satellite aerial images, and the associated map image of the area of interest.

Upon generating the plurality of synthetic map images, at step 306 of the method 300, the one or more hardware processors 104 are configured to cluster the plurality of pixels in the plurality of synthetic map images of the PMRIT-NET into the plurality of land-use classes, via the K-means clustering, to obtain the plurality of cluster centres. The K-Means clustering is applied to segment the plurality of synthetic map images into the plurality of land-use classes based on a color, to get one representative color for each of the plurality of land-use class. A stop criterion is set for the K-means clustering, for example, an accuracy threshold > 85%. The plurality of cluster centres K (number of land-use classes) is chosen, and the K-Means clustering will group pixels with similar colors into the plurality of cluster centres. Finally, each of the plurality of pixels attains a label of an associated nearest cluster centre of the plurality of cluster centres corresponding to each of the plurality of land-use classes. The plurality of land-use classes comprises, but not limited to, a building class, a grassland class, a highway marking class, a large road class, a small road class, a water body class, a commercial area class, and a city block class.

At step 308 of the method 300, the one or more hardware processors 104 are configured to incorporate the global level stochasticity, the regional level stochasticity, and the pixel level stochasticity for each of the plurality of synthetic map images that were clustered into the plurality of land-use classes, based on the geometric nature of the plurality of land-use categories, to obtain the spectral information of the plurality of synthetic map images. The geometric nature corresponds to one of (i) the synthetic map image, (ii) the plurality of pixels in the synthetic map image, and (iii) a pixel in the synthetic map image.

Grasslands and water bodies class have compositions that can vary within very small spatial resolutions. So, for the grassland class and the water body class, a landcover class (e.g., grasslands can comprise trees, bushes, foliage, grasses, etc.) type of stochasticity is applied by random sampling from a distribution at the pixel level in the synthetic map image. For buildings, urban roads, commercial areas, and city blocks usually do not vary much at the pixel level. Depending on the spatial resolution, they might have a couple of neighbouring pixels together, which form the plurality of land-use classes. For the building class, the highway marking class, the large road class, the small road class, the commercial area class, and the city block class the CCA is performed, separate each separable instance, and provide different constituent material for that instance within the same land-cover class type. The stochasticity is induced at the regional level in these classes. Finally, some of the plurality of synthetic map images falls under the first synthetic map image type and, and others falls under the second synthetic map image type. The first synthetic map image type is an urban synthetic map image according to some embodiment of the present disclosure. The second synthetic map image type is a rural synthetic map image according to some embodiment of the present disclosure. The number of buildings within the synthetic map image to decide if the synthetic map image is from an urban area or a rural area. Depending on the urban area or the rural area, the specific constituent material of the the plurality of land-use classes changes. For example, a slum building might have roofs of oxidized/non-oxidized galvanized metal, asbestos, clay tiles, etc., while an industrial building could have color coated roofing or galvanized steel.

The global level stochasticity is incorporated by:
(a) Identifying a plurality of buildings in the synthetic map image by performing the CCA on the plurality of land-use classes of the synthetic map image.
(b) classifying each synthetic map image as one of (i) the first synthetic map image type, and (ii) the second synthetic map image type based on the plurality of buildings in the synthetic map image, wherein each synthetic map image is classified as one of the (i) first synthetic map image type, and (ii) the second synthetic map image type based on a comparison of (i) a number of plurality of buildings and (ii) a predefined value.

The regional level stochasticity is incorporated by:
(a) Identifying a plurality of connected component regions of the plurality of land-use classes that occupy the plurality of pixels in one of (i) the first synthetic map image type, and (ii) the second synthetic map image type identified at the global level stochasticity, wherein each of the plurality of connected component regions comprises a constituent material of a plurality of constituent materials.
(b) Selecting a spectral signature of the constituent material for each of the plurality of connected component regions, via the spectral library, to obtain a plurality of spectral signatures associated with the plurality of connected component regions.
(c) Feeding the plurality of connected component regions with the plurality of spectral signatures to obtain a spectral component of one of (i) the first synthetic map image type and, (ii) the second synthetic map image type, wherein the first synthetic map image type and the second synthetic map image type are embedded with spectral information by feeding with the plurality of spectral signatures; and

The pixel level stochasticity is incorporating by:
(a) Identifying the plurality of land-use classes for each of the pixels in one of (i) the first synthetic map image type, and (ii) the second synthetic map image type identified at the global level stochasticity, and wherein each pixel comprises the constituent material of the plurality of constituent materials.
(b) Selecting the spectral signature of the constituent material for each of the pixel in one of (i) the first synthetic map image type, and (ii) the second synthetic map image type, via the spectral library, to obtain a plurality of pixel-level spectral signatures.
(c) Feeding each of the pixel with the plurality of pixel level spectral signatures to obtain a pixel level spectral component of one of (i) the first synthetic map image type, and (ii) the second synthetic map image type, wherein the first synthetic map image type and the second synthetic map image type are embedded with the spectral information by feeding with the plurality of pixel level spectral signatures.

The spectral information of each of the plurality of synthetic map images is obtained by incorporating the global level stochasticity, the regional level stochasticity, and the pixel level stochasticity for each of the plurality of synthetic map images.

At step 310 of the method 300, the one or more hardware processors 104 are configured to generate the plurality of SHSIs for the received plurality of spatial multi-resolution satellite aerial images, using the obtained spatial information of the plurality of spatial multi-resolution satellite aerial images from the PMRIT-NET, and the obtained spectral information of the plurality of synthetic map images. The generated plurality of SHSIs forms a synthetically generated HSI dataset.

During inference stage, upon receiving a new satellite aerial image, a synthetic hyperspectral image is generated, by:
(a) Predicting the synthetic map image comprising the spatial information for the received new satellite aerial image using the PMRIT-NET.
(b) Clustering the pixels of the synthetic map image into the plurality of land-use classes, by using the plurality of cluster centres.
(c) Incorporating the global level stochasticity, the regional level stochasticity, and the pixel level stochasticity for the synthetic map image, based on the geometric nature of the plurality of land-use classes, to obtain the spectral information of the synthetic map image.
(d) generating the synthetic hyperspectral image using the spatial information for the received new satellite aerial image and the the spectral information of the synthetic map image.

The pretext task can be learned using the generated plurality of SHSIs. Encoders can be trained to learn the pretext task using the synthetically generated HSI dataset comprising the plurality of SHSIs. This would limit the need for having a large, labelled database for learning downstream tasks. A neural network-based encoder extracts representation vectors from a satellite map and terrain data. The encoder comprises a base encoder and a projection head (providing the representation *z*ᵢ for the *i*^{*t*h} instance). For simplicity, the Residual Network (ResNet) encoder is opted for the base and a few layers on fully connected network for the projection head. A contrastive loss is optimized using a Siamese architecture of encoders from both the data modalities that learn the similarity between the visual representations. Once the visual encoders have been learned, the projection head is removed, and the base encoder can be used to learn the downstream task.

For the downstream task, any application of a HSI sensor can be chosen that can benefit from pre-trained HIS encoder heads.

### Experimental Results

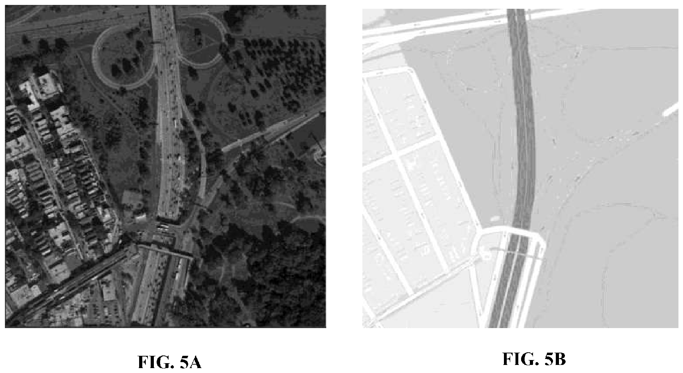

For experimental analysis of the method of the present disclosure a map aerial photos dataset is used to learn the pretext task (http://efrosgans.eecs.berkeley.edu/pix2pix/datasets/). It consists of 1096 training images and 1098 test images of 256 × 256 resolution aerial photos and their associated map images, scraped from Google Maps. The images were taken mainly from regions around New York City. FIGS. 5A, and 5B depict an exemplary spatial satellite aerial image, and the associated map image of the area of interest respectively, according to some embodiments of the present disclosure.

For a downstream task of learning classification maps from unimodal and multimodal data, two variants of datasets were used, Houston 2013 dataset (HSI-Light Detection and Ranging (LiDAR) (https://machinelearning.ee.uh.edu/2013-ieee-grss-data-fusion-contest/) and HSI - Multispectral images (MSI) ( https://github.com/danfenghong/ISPRS S2FL)). The National Center for Airborne Laser Mapping (NCALM) published these data covering Texas regions in 2013. HSI data has 144 spectral bands ranging from 0.38 µm to 1.05 µm resolution. The LiDAR consists of a single channel, and both data are of 349×1905 pixels raster map with a spatial resolution of 2.5 m. It consists of 15 different land-use classes.

**Implementation details:** The network architecture of a pretext task of generating the spatial information for a HIS image is kept similar to a Pix2pix model, trained for 200 epochs on an A100 multi-instance GPU. The 1098 test images were used to obtain spatial geometry and assign each image pixel with a consistent class label. K-means clustering (with k chosen as 8) has been performed to ensure that each pixel belongs to an assigned land-use class. Table I illustrates the plurality of cluster centers visualized in terms of colors and their corresponding labels.

**Table I**

| **Color** | **Land-use Class** | **Urban Area** | **Rural Area** |
|---|---|---|---|
| gray | Buildings | Concrete Roof, Metal Roofing, TATA Blue/Green Scopes | Clay Tile, Wood Shingle, Asphalt Shingle, |
| green | Grasslands | Trees, Bushes, Grass | Crops, Trees, Bushes, Grass |
| light gray | Highway Markings | White Paint, Yellow Paint | - |
| Reddish Orange | Large Road | Concrete, Bitumin, Cement, Aggregates, Asphalt | Aggregates, Bitumin, Bare Soil, Sand, Clay, Gravel, Asphalt |
| white | Small Road | Concrete, Bitumin, Cement, Aggregates, Asphalt | Aggregates, Bitumin, Bare Soil, Sand, Clay, Gravel, Asphalt |
| Blue | Water Bodies | Muddy water, clear water, chlorinated swimming pool water | Muddy water, clear water, algae blooms, swampy and marshy areas |
| orangish pink | Commercial Area | Concrete, Steel, Wood, Grass, Bushes, Pavement Block | Grass, Bushes, Cement, Sand, Gravel, Wood, Trees |
| Orangish gray | City Block | Concrete, Steel, Wood, Grass, Bushes, Pavement Block | Grass, Bushes, Cement, Sand, Gravel, Wood, Trees |

Graph attention fusion network (GAF-Net) architecture was used as the backbone for the downstream classification and fusion task. A pre-existing network architecture is used to highlight the advantage of the method of present disclosure using synthetically generated HSI dataset. The pre-trained HSI encoder was used to replace the baseline encoder of the GAF-Net (which was ResNet-50 in this case) and perform the training. For a unimodal classification map generation part, the HSI encoder is used, and for the fused classification map generator, both the LiDAR/SAR and HSI encoders were used. The overall performance is reported using three quantitative evaluation measures: overall accuracy (OA), average accuracy (AA), and κ-score.

**Results:** The method of the present disclosure, the Hyper-SynGen framework has been compared with some of the state-of-the-art (SOTA) frameworks for remote sensing data fusion, such as Hyper-embedder, two-branch (2-Branch) Convolutional Neural Network (CNN), End-Net, coupled convolution neural network (Co-CNN), cross-channel reconstruction Network (CCR-Net), feature fusion and extraction module that uses attention networks (FusAtNet), Multimodal Fusion Transformer (MFT), and Global Attention based Fusion Network (GAF-Net). Table II shows the performance of the SOTA on two variants of the Houston 2013 datasets and reports the performance in terms of OA, AA, and κ-score.

**Table II**

| **Frameworks** | **Houston2013** | | | **Houston2013** | | |
|---|---|---|---|---|---|---|
| | **HSI-LiDAR** | | | **HSI-MSI** | | |
| | **OA** | **AA** | ***κ*** | **OA** | **AA** | ***κ*** |
| **Hyper-Embedder** | 82.64±0.45 | 83.15 | 0.81 | 82.77±0.30 | 83.81 | 0.81 |
| **2-Branch CNN** | 87.98±0.29 | 90.11 | 0.87 | 86.56±0.23 | 89.21 | 0.86 |
| **End-Net** | 88.52±0.24 | 89.85 | 0.88 | 87.65±0.40 | 88.29 | 0.86 |
| **Co-CNN** | 88.96±0.41 | 89.21 | 0.88 | 85.44±0.33 | 84.1 | 0.82 |
| **CCR-Net** | 89.66±0.27 | 91.53 | 0.89 | 88.15±0.19 | 89.82 | 0.87 |
| **FusAtNet** | 89.98±0.34 | 94.65 | 0.89 | 86.17±0.51 | 86.39 | 0.84 |
| **MFT** | 89.80±0.53 | 91.51 | 0.89 | 89.15±0.96 | 90.56 | 0.88 |
| **GAF-Net** | 91.39±0.21 | 94.92 | 0.9 | 90.64±0.17 | 93.3 | 0.89 |
| **Hyper-SynGen** | 92.44±0.44 | 94.98 | 0.91 | 92.74±0.19 | 94 | 0.91 |

The MFT uses a transformer as a feature extractor instead of CNN-based feature extractors in the remaining frameworks. Hence, in some sense, direct comparison with MFT is not fair, and yet it was observed that the Hyper-SynGen framework consistently outperformed all the existing SOTA with the help of the pre-trained encoder in a self-supervised manner. In the HSI-LiDAR dataset, the Hyper-SynGen framework is found to outperform the SOTA by a margin of 1% in the OA, while in the HSI-MSI dataset, it outperformed the SOTA by a margin of 2% in the OA. This considerable boost has been achieved with almost no extra effort from the tedious manual labeling of complicated HSI data. A simple exploitation of existing map images data helps train a robust encoder that achieves superior performance compared to the SOTA.

For the second set of experiments, individual performance of the HSI data was compared. Table III shows the performance of the Hyper-SynGen framework with self-supervised encoders and the vanilla GAF-Net, which was trained on the above-mentioned datasets (Houston 2013 HSI-LIDAR and HSI-MSI). The GAF-Net is a fusion network, but only one modality (HSI) was taken to train the network (converting it into a unimodal framework). It was seen that there is a boost of 7% in the HSI modality alone in OA when the network is trained using the additional synthetically generated HSI dataset.

**Table III**

| **Framework** | | **OA** | **AA** | **K** |
|---|---|---|---|---|
| **GAF-Net** | HSI | 79.82±0.22 | 80.65 | 0.75 |
| | LiDAR/MSI | Not Applicable | | |
| | HSI - LiDAR | 91.39±0.21 | 94.92 | 0.9 |
| **Hyper-SynGen** | HSI | 87.24±0.31 | 85.78 | 0.83 |
| | LiDAR/MSI | Not Applicable | | |
| | HSI - LiDAR | 92.44±0.44 | 94.98 | 0.91 |

To test the effect of synthetically trained data, a few-shot training was performed by providing only k samples of each land-use class during the training as shown in Table IV.

**Table IV**

| **No. of training samples** | **HSI-LiDAR** | **HSI-MSI** |
|---|---|---|
| | OA (%) | OA (%) |
| 10 | 75.65 | 72.13 |
| 50 | 80.71 | 78.33 |
| 150 | 84.19 | 80.32 |
| 200 | 87.88 | 83.17 |
| 250 | 90.78 | 86.98 |
| All | 92.44 | 92.7 |

In 10-shot learning, it was observed that the network yields a massive performance of ≈75% of OA. When 50 shots of training data were provided, the performance increased considerably by a margin of 5%. This is possible only because the initial encoders are familiar with the HSI data's representative features in the pretext task. Likewise, the number of shots continued to increase, and it was found that even with only 250 shots of training data, nearly equivalent performance is achieved to that with the full dataset of the SOTA (GAF-Net). Similarly, it was observed significantly high initial performance in the HSI-MSI dataset using simple 10-shot learning. The more training data is added, the more the performance undoubtedly improved, but the gradient of the increase in performance in the initial few shots was much higher. To reduce the effort of manually annotating training data, more such images can be cropped from the map images and can generate synthetic HSI data that can help boost the overall performance by a large margin.

Therefore, the disclosed Hyper-SynGen framework to synthetically generate HSI images using the generative framework while replicating the complexity of real-world landscapes and injecting stochasticity in the class distribution of each land-use class at the pixel level, the regional, and the global level. The method of present disclosure generates the plurality of SHSIs for the plurality of spatial multi-resolution satellite aerial images provided by considering the spatial information and the spectral information separately. When the synthetically generated HSI dataset was replaced with manually labeled original data, the synthetically generated HIS dataset is found to be as capable as the actual data, as it supplements the actual dataset and boosts the overall SOTA by a considerable margin.

The embodiments of present disclosure herein address unresolved problem of learning HSIs require large, annotated training datasets, which is a laborious task. The embodiment thus provides the method and the system for generating synthetic hyperspectral images (SHSIs) from spatial multi-resolution satellite aerial images. The disclosed method extracts the spatial information separately and is filled with spectral information, consequently, to generate a higher-resolution SHSIs. Furthermore, to get high-resolution spatial information, an image-to-image translation is used to yield better results than direct clustering or segmentation, as these can lead to loss of continuity information (e.g., disjoint roads, disconnected rivers, etc.). The disclosed method provides the Hyper-SynGen framework to synthetically generate the plurality of SHSIs without manual labeling. The spatial geometry of of the plurality of land-use classes is extracted using the image-to-image translation technique referred to as the PMRIT-NET from the map image and the spectral information is added using a spectral library. To replicate complexity of real-world landscapes, the stochasticity is incorporated in a land-use class distribution at i) the pixel level, ii) the region level, and iii) a global level, depending on the land-use class at hand. This process relies on crowd-sourced labeling provided by the map image and does not require further manual labeling. Using the plurality of SHSIs to learn the pretext task on a self-supervised learning setup helps achieve better performance than the existing SOTA. Hence, when replaced with real annotated data, synthetically generated HSI dataset comprising the plurality of SHSIs is experimentally found to be as capable as real data, as it boosts the overall SOTA by a considerable margin.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), the method comprising:
receiving (302), via one or more hardware processors, a plurality of spatial multi-resolution satellite aerial images captured via a satellite, and an associated map image of an area of interest;
generating (304), by using a Pixel-to-pixel Multi-Resolution Image-to-image Translation Network (PMRIT-NET) via the one or more hardware processors, a plurality of synthetic map images using the plurality of spatial multi-resolution satellite aerial images and the associated map image, wherein the plurality of synthetic map images represents a spatial information of the area of interest;
clustering (306), via the one or more hardware processors, a plurality of pixels in the plurality of synthetic map images of the PMRIT-NET into a plurality of land-use classes, via a K-means clustering, to obtain a plurality of cluster centres, wherein each of the plurality of pixels attains a label of an associated nearest cluster centre of the plurality of cluster centres corresponding to each of the plurality of land-use classes;
incorporating (308), via the one or more hardware processors, a global level stochasticity, a regional level stochasticity, and a pixel level stochasticity for each of the plurality of synthetic map images that were clustered into the plurality of land-use classes, based on a geometric nature of the plurality of land-use categories, to obtain a spectral information of the plurality of synthetic map images; and
generating (310), via the one or more hardware processors, a plurality of synthetic hyperspectral images (SHSIs) for the received plurality of spatial multi-resolution satellite aerial images, using the obtained spatial information of the plurality of spatial multi-resolution satellite aerial images from the PMRIT-NET, and the obtained spectral information of the plurality of synthetic map images.

2. The processor implemented method as claimed in claim 1, wherein the PMRIT-NET is trained by iteratively performing:
(a) predicting a synthetic map image corresponding to a spatial multi-resolution satellite aerial image of the plurality of spatial multi-resolution satellite aerial images by a generator function of the PMRIT-NET; and
(b) classifying the synthetic map image as a real image or a fake image by a discriminator function of the PMRIT-NET, wherein if the synthetic map image is classified as the fake image, then the generator function is updated based on the map image for enhancing a quality of the synthetic map image, and repeating the steps (a), and (b), and wherein the training of the PMRIT-NET stops when the discriminator function fails to classify the synthetic map image as the fake image.

3. The processor implemented method as claimed in claim 1, wherein the PMRIT-NET upon receiving a new satellite aerial image predicts the corresponding synthetic map image.

4. The processor implemented method as claimed in claim 1, wherein the geometric nature corresponds to one of (i) the synthetic map image, (ii) a plurality of pixels in the synthetic map image, and (iii) a pixel in the synthetic map image.

5. The processor implemented method as claimed in claim 1, wherein the global level stochasticity, the regional level stochasticity, and the pixel level stochasticity are incorporated for each of the synthetic map images, based on the geometric nature of the plurality of land-use classes, to obtain the spectral information of the plurality of synthetic map images by:
(a) incorporating the global level stochasticity by:
identifying a plurality of buildings in the synthetic map image by performing Connected Component Analysis (CCA) on the plurality of land-use classes of the synthetic map image; and
classifying each synthetic map image as one of (i) a first synthetic map image type, and (ii) a second synthetic map image type based on the plurality of buildings in the synthetic map image, wherein each synthetic map image is classified as one of the (i) first synthetic map image type, and (ii) the second synthetic map image type based on a comparison of (i) a number of plurality of buildings and (ii) a predefined value;
(b) incorporating the regional level stochasticity by:
identifying a plurality of connected component regions of the plurality of land-use classes that occupy the plurality of pixels in one of (i) the first synthetic map image type, and (ii) the second synthetic map image type identified at the global level stochasticity, wherein each of the plurality of connected component regions comprises a constituent material of a plurality of constituent materials;
selecting a spectral signature of the constituent material for each of the plurality of connected component regions, via a spectral library, to obtain a plurality of spectral signatures associated with the plurality of connected component regions; and
feeding the plurality of connected component regions with the plurality of spectral signatures to obtain a spectral component of one of (i) the first synthetic map image type and, (ii) the second synthetic map image type, wherein the first synthetic map image type and the second synthetic map image type are embedded with spectral information by feeding with the plurality of spectral signatures; and
(c) incorporating the pixel level stochasticity by:
identifying the plurality of land-use classes for each of the pixel in one of (i) the first synthetic map image type, and (ii) the second synthetic map image type identified at the global level stochasticity, and wherein each pixel comprises the constituent material of the plurality of constituent materials;
selecting a spectral signature of the constituent material for each of the pixel in one of (i) the first synthetic map image type, and (ii) the second synthetic map image type, via the spectral library, to obtain a plurality of pixel-level spectral signatures; and
feeding each of the pixel with the plurality of pixel level spectral signatures to obtain a pixel level spectral component of one of (i) the first synthetic map image type, and (ii) the second synthetic map image type, wherein the first synthetic map image type and the second synthetic map image type are embedded with the spectral information by feeding with the plurality of pixel level spectral signatures.

6. The processor implemented method as claimed in claim 1, wherein the synthetic hyperspectral image (SHSI) is generated during inference stage upon receiving a new satellite aerial image, by:
(a) predicting the synthetic map image comprising the spatial information for the received new satellite aerial image using the PMRIT-NET;
(b) clustering the pixels of the synthetic map image into the plurality of land-use classes, by using the plurality of cluster centres;
(c) incorporating the global level stochasticity, the regional level stochasticity, and the pixel level stochasticity for the synthetic map image, based on the geometric nature of the plurality of land-use classes, to obtain the spectral information of the synthetic map image; and
(d) generating the SHSI using the spatial information for the received new satellite aerial image and the the spectral information of the synthetic map image.

7. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a plurality of spatial multi-resolution satellite aerial images captured via a satellite, and an associated map image of an area of interest;
generate by using a Pixel-to-pixel Multi-Resolution Image-to-image Translation Network (PMRIT-NET), a plurality of synthetic map images using the plurality of spatial multi-resolution satellite aerial images and the associated map image, wherein the plurality of synthetic map images represents a spatial information of the area of interest;
cluster a plurality of pixels in the plurality of synthetic map images of the PMRIT-NET into a plurality of land-use classes, via a K-means clustering, to obtain a plurality of cluster centres, wherein each of the plurality of pixels attains a label of an associated nearest cluster centre of the plurality of cluster centres corresponding to each of the plurality of land-use classes;
incorporate a global level stochasticity, a regional level stochasticity, and a pixel level stochasticity for each of the plurality of synthetic map images that were clustered into the plurality of land-use classes, based on a geometric nature of the plurality of land-use categories, to obtain a spectral information of the plurality of synthetic map images; and
generate a plurality of synthetic hyperspectral images (SHSIs) for the received plurality of spatial multi-resolution satellite aerial images, using the obtained spatial information of the plurality of spatial multi-resolution satellite aerial images from the PMRIT-NET, and the obtained spectral information of the plurality of synthetic map images.

8. The system as claimed in claim 7, wherein the PMRIT-NET is trained by iteratively performing:
(a) predicting a synthetic map image corresponding to a spatial multi-resolution satellite aerial image of the plurality of spatial multi-resolution satellite aerial images by a generator function of the PMRIT-NET; and
(b) classifying the synthetic map image as a real image or a fake image by a discriminator function of the PMRIT-NET, wherein if the synthetic map image is classified as the fake image, then the generator function is updated based on the map image for enhancing a quality of the synthetic map image, and repeating the steps (a), and (b), and wherein the training of the PMRIT-NET stops when the discriminator function fails to classify the synthetic map image as the fake image.

9. The system as claimed in claim 7, wherein the PMRIT-NET upon receiving a new satellite aerial image predicts the corresponding synthetic map image.

10. The system as claimed in claim 7, wherein the geometric nature corresponds to one of (i) the synthetic map image, (ii) a plurality of pixels in the synthetic map image, and (iii) a pixel in the synthetic map image.

11. The system as claimed in claim 7, wherein the global level stochasticity, the regional level stochasticity, and the pixel level stochasticity are incorporated for each of the synthetic map images, based on the geometric nature of the plurality of land-use classes, to obtain the spectral information of the plurality of synthetic map images by:
(a) incorporating the global level stochasticity by:
identifying a plurality of buildings in the synthetic map image by performing Connected Component Analysis (CCA) on the plurality of land-use classes of the synthetic map image; and
classifying each synthetic map image as one of (i) a first synthetic map image type, and (ii) a second synthetic map image type based on the plurality of buildings in the synthetic map image, wherein each synthetic map image is classified as one of the (i) first synthetic map image type, and (ii) the second synthetic map image type based on a comparison of (i) a number of plurality of buildings and (ii) a predefined value;
(b) incorporating the regional level stochasticity by:
identifying a plurality of connected component regions of the plurality of land-use classes that occupy the plurality of pixels in one of (i) the first synthetic map image type, and (ii) the second synthetic map image type identified at the global level stochasticity, wherein each of the plurality of connected component regions comprises a constituent material of a plurality of constituent materials;
selecting a spectral signature of the constituent material for each of the plurality of connected component regions, via a spectral library, to obtain a plurality of spectral signatures associated with the plurality of connected component regions; and
feeding the plurality of connected component regions with the plurality of spectral signatures to obtain a spectral component of one of (i) the first synthetic map image type and, (ii) the second synthetic map image type, wherein the first synthetic map image type and the second synthetic map image type are embedded with spectral information by feeding with the plurality of spectral signatures; and
(c) incorporating the pixel level stochasticity by:
identifying the plurality of land-use classes for each of the pixel in one of (i) the first synthetic map image type, and (ii) the second synthetic map image type identified at the global level stochasticity, and wherein each pixel comprises the constituent material of the plurality of constituent materials;
selecting a spectral signature of the constituent material for each of the pixel in one of (i) the first synthetic map image type, and (ii) the second synthetic map image type, via the spectral library, to obtain a plurality of pixel-level spectral signatures; and
feeding each of the pixel with the plurality of pixel level spectral signatures to obtain a pixel level spectral component of one of (i) the first synthetic map image type, and (ii) the second synthetic map image type, wherein the first synthetic map image type and the second synthetic map image type are embedded with the spectral information by feeding with the plurality of pixel level spectral signatures.

12. The system as claimed in claim 7, wherein the synthetic hyperspectral image (SHSI) is generated during inference stage upon receiving a new satellite aerial image, by:
(a) predicting the synthetic map image comprising the spatial information for the received new satellite aerial image using the PMRIT-NET;
(b) clustering the pixels of the synthetic map image into the plurality of land-use classes, by using the plurality of cluster centres;
(c) incorporating the global level stochasticity, the regional level stochasticity, and the pixel level stochasticity for the synthetic map image, based on the geometric nature of the plurality of land-use classes, to obtain the spectral information of the synthetic map image; and
(d) generating the SHSI using the spatial information for the received new satellite aerial image and the the spectral information of the synthetic map image.

13. One or more non-transitory machine-readable information storage mediums comprising one or more instructions which when executed by one or more hardware processors cause:
receiving a plurality of spatial multi-resolution satellite aerial images captured via a satellite, and an associated map image of an area of interest;
generating by using a Pixel-to-pixel Multi-Resolution Image-to-image Translation Network (PMRIT-NET), a plurality of synthetic map images using the plurality of spatial multi-resolution satellite aerial images and the associated map image, wherein the plurality of synthetic map images represents a spatial information of the area of interest;
clustering a plurality of pixels in the plurality of synthetic map images of the PMRIT-NET into a plurality of land-use classes, via a K-means clustering, to obtain a plurality of cluster centres, wherein each of the plurality of pixels attains a label of an associated nearest cluster centre of the plurality of cluster centres corresponding to each of the plurality of land-use classes;
incorporating a global level stochasticity, a regional level stochasticity, and a pixel level stochasticity for each of the plurality of synthetic map images that were clustered into the plurality of land-use classes, based on a geometric nature of the plurality of land-use categories, to obtain a spectral information of the plurality of synthetic map images; and
generating a plurality of synthetic hyperspectral images (SHSIs) for the received plurality of spatial multi-resolution satellite aerial images, using the obtained spatial information of the plurality of spatial multi-resolution satellite aerial images from the PMRIT-NET, and the obtained spectral information of the plurality of synthetic map images.

14. The one or more non-transitory machine-readable information storage mediums as claimed in claim 13, wherein the PMRIT-NET is trained by iteratively performing:
(a) predicting a synthetic map image corresponding to a spatial multi-resolution satellite aerial image of the plurality of spatial multi-resolution satellite aerial images by a generator function of the PMRIT-NET; and
(b) classifying the synthetic map image as a real image or a fake image by a discriminator function of the PMRIT-NET, wherein if the synthetic map image is classified as the fake image, then the generator function is updated based on the map image for enhancing a quality of the synthetic map image, and repeating the steps (a), and (b), and wherein the training of the PMRIT-NET stops when the discriminator function fails to classify the synthetic map image as the fake image.

15. The one or more non-transitory machine-readable information storage mediums as claimed in claim 13, wherein the PMRIT-NET upon receiving a new satellite aerial image predicts the corresponding synthetic map image.
